# EUROPEAN PATENT SPECIFICATION

(11) **EP 0 708 142 B1**
(45) Date of publication and mention of the grant of the patent: **15.03.2000**
(21) Application number: 95120551.7
(22) Date of filing: 21.09.1989
(51) Int. Cl.: C08K 7/14, C08G 69/26, C08L 77/00

(54) **Polyamide resin compositions**
Polyamidharz-Zusammensetzungen
Compositions de résine polyamide

(30) Priority: 31.08.1989 JP 22575489
(43) Date of publication of application: 24.04.1996
(62) Divisional of application: 89309644.6
(73) Proprietor: MITSUI CHEMICALS, INC., Tokyo (JP)
(72) Inventor: Sakai, Hideki, c/o MITSUI PETROCHEM. IND., LTD., Kuga-gun, Yamaguchi (JP); Ishiwatari, Kazuo, c/o MITSUI PETROCHEM. IND. LTD., Kuga-gun, Yamaguchi (JP); Ikejiri, Fumitoshi, c/o MITSUI PETROCHEM. IND. LTD, Kuga-gun, Yamaguchi (JP)
(74) Representative: Cresswell, Thomas Anthony

(56) References cited:
- EP-A- 0 280 221
- EP-A- 0 350 689
- DE-B- 1 197 615
- FR-A- 2 246 607
- US-A- 4 250 065
- PATENT ABSTRACTS OF JAPAN vol. 011 no. 106 (C-414) ,3 April 1987 & JP-A-61 254662 (SEIKO EPSON CORP) 12 November 1986,
- PATENT ABSTRACTS OF JAPAN vol. 10 no. 276 (C-373) ,10 September 1986 & JP-A-61 097356 (SEIKO EPSON CORP) 15 May 1986,

## Description

This invention relates to a polyamide resin composition. Polyamide resins have well balanced properties and are in wide use as engineering plastics, in such applications as, for example, automobile or electric parts. In particular, aromatic polyamide resins composed of aromatic dicarboxylic acids, e.g., terephthalic acid, and aliphatic diamines, e.g., hexamethylenediamine, have higher melting points and higher mechanical properties than aliphatic polyamide resins, and thus they have a great expectation of use in much broader fields.

Aromatic polyamide resin compositions which contain fibrous reinforcements such as glass fibers to further improve the heat resistance or rigidity of the resins are also known.

However, the polyamide resins and their compositions have low fluidity as well as high melting points, so that it is necessary that they be molded or processed at high temperatures near to their thermal decomposition temperatures. Further, when the polyamide resins or their compositions are injection-molded, they produce large amounts of frictional heat and very often they thermally decompose to lower molecular weight resins, thus the properties which the polyamide resins or their compositions originally possess deteriorate. Therefore, it has been difficult to produce molded articles having thin walls or complicated shapes by injection molding because of the particularly large amount of frictional heat liberated.

As a further defect, aromatic polyamide resin compositions in general have inferior mold-releasing properties, so that thin-walled molded articles are apt to break when they are released from molds.

As a still further defect, the aromatic polyamide resin compositions have low fluidity, and accordingly the supply of the compositions to molding machines from hoppers is not carried out smoothly in injection or extrusion molding. Thus, metering of the compositions is of insufficient accuracy, and the resultant individual molded articles are apt to be uneven in quality.

There is described in Japanese Patent Laid-open No. 61-188457 a polyamide resin composition for thin-walled articles which contains nylon 46, glass fibers in an amount of 10-80 parts by weight per 100 parts by weight of the resin, and a lubricant in an amount of 0.001-1 part by weight per 100 parts by weight of the total of the resin and the glass fibers. A further polyamide resin composition for thin-walled articles is described in Japanese Patent Laid-open No. 61-188458 which contains nylon 46 and a lubricant such as a bisamide, fatty acid salt of a group I, II or III metal, polyethylene glycol, aliphatic carboxylic acid of 26-32 carbon atoms or a derivative thereof.

In the above references, it is said that nylon 46, which has a high melting point, is improved in moldability, and reduction in molecular weight of the resin during molding is prevented. Further, it is described therein that the nylon 46 includes mixtures or copolymers of nylon 46 with nylon 66/6T (terephthalic acid component) or nylon 66/6T/6I (isophthalic acid component).

However, these prior polyamide resin compositions contain nylon 46, an aliphatic polyamide resin, as a main component. Therefore, it is not expected that the heat resistance of aliphatic polyamide resin compositions would be improved to a great extent by incorporating small amounts of aromatic polyamide resins thereinto, compared with the original aliphatic polyamide resins.

Aromatic polyamide resins have much higher melting points, much higher molding temperatures and much higher heat deflection temperatures than aliphatic polyamide resins, and aromatic polyamide resins are different in molecular structure from aliphatic polyamide resins.
Therefore, nothing has heretofore been known about the improvement of moldability of compositions which contain aromatic polyamide resins as a main component.

It is, therefore, an object of the invention to provide an aromatic polyamide resin composition which has excellent fluidity and mold-releasing properties, as well as high heat resistance and rigidity, and thus a reduction in molecular weight during molding is prevented.

In accordance with the invention, there is provided a polyamide resin composition which comprises:
(A) an aromatic polyamide resin consisting of:
   (a) a dicarboxylic acid component which consists of terephthalic acid in an amount of at least 40 mole % together with an aliphatic dicarboxylic acid in an amount of 60 mole% or less, and
   (b) a diamine component comprising at least one aliphatic diamine or alicyclic diamine;
(B) optionally a fibrous reinforcement in an amount of 0-200 parts by weight per 100 parts by weight of the aromatic polyamide resin; and
(C) at least one additive which is a partially saponified ester or a metal salt of an aliphatic carboxylic acid of 26-32 carbon atoms in an amount of 0.01-5 parts by weight per 100 parts by weight of the aromatic polyamide resin.

The aromatic polyamide resin used consists of a dicarboxylic acid component and a diamine component. The dicarboxylic acid component includes terephthalic acid as an aromatic dicarboxylic acid component in amounts of at least 40 mole % and an aliphatic dicarboxylic acid component in an amount of 60 mole % or less. The aliphatic dicarboxylic acid component used is preferably of 4-20 carbons, more preferably of 6-12 carbons, and may be, for example, succinic acid, adipic acid, azelaic acid, sebacic acid, decane dicarboxylic acid, undecane dicarboxylic acid or dodecane dicarboxylic acid, of which adipic acid is particular preferred.

When the polyamide resins used are composed of the dicarboxylic acid component and diamine component in specific amounts as set forth above, the resultant resin compositions provide molded articles which have high heat resistance, and hence high resistance to heat degradation or high thermal deflection temperature, as well as high mechanical properties such as tensile strength, flexural strength or wear resistance, chemical resistance or water resistance.

The diamine component used is an aliphatic diamine or an alicyclic diamine, or a mixture of these. The aliphatic diamine may be linear or branched. Preferred diamines are linear or branched alkylene diamines of 4-25 carbons, most preferably of 6-18 carbons. Thus, the preferred linear alkylene diamines may be exemplified by 1,6-diaminohexane, 1,7-diaminoheptane, 1,8-diaminooctane, 1,9-diaminononane, 1,10-diaminodecane, 1,11-diaminoundecane or 1,12-diaminododecane component. The preferred branched alkylene diamine component may be exemplified by 1,4-diamino-1,1-dimethylbutane, 1,4-diamino-1-ethylbutane, 1,4-diamino-1,2-dimethylbutane, 1,4-diamino-1,3-dimethylbutane, 1,4-diamino-1,4-dimethylbutane, 1,4-diamino-2,3-dimethylbutane, 1,2-diamino-1-butylethane, 1,6-diamino-2,5-dimethylhexane, 1,6-diamino-2,4-dimethylhexane, 1,6-diamino-3,3-dimethylhexane, 1,6-diamino-2,2-dimethylhexane, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane, 1,8-diamino-1,3-dimethyloctane, 1,8-diamino-1,4-dimethyloctane, 1,8-diamino-2,4-dimethyloctane, 1,8-diamino-3,4-dimethyloctane, 1,8-diamino-4,5-dimethyloctane, 1,8-diamino-2,2-dimethyloctane, 1,8-diamino-3,3-dimethyloctane, 1,8-diamino-4,4-dimethyloctane, 1,6-diamino-2,4-diethylhexane or 1,9-diamino-5-methylnonane.

Among the diamines listed above, the linear alkylene diamines are preferred, and in particular, 1,6-diaminohexane, 1,8-diaminooctane, 1,10-diaminodecane or 1,12-diaminododecane, or a mixture of two or more of these are preferred.

The alicyclic diamines used, in turn, are usually of 6-25 carbons, and contain at least one alicyclic ring. These may be exemplified by 1,3-diaminocyclohexane, 1,4-diaminocyclohexane, 1,3-bis(aminomethyl)cyclohexane, 1,4-bis(aminomethyl)cyclohexane, isophoronediamine, piperazine, 2,5-dimethylpiperazine, bis(4-aminocyclohexyl)methane, bis(4-aminocyclohexyl)propane, 4,4'-diamino-3,3'-dimethyldicyclohexylmethane, 4,4'-diamino-3,3'-dimethyldicyclohexylpropane, 4,4'-diamino-3,3'-dimethyl-5,5'-dimethyldicyclohexylmethane, 4,4'-diamino-3,3'-dimethyl-5,5'-dimethyldicyclohexylpropane, α,α'-bis(4-aminocyclohexyl)-p-diisopropylbenzene, α,α'-bis(4-aminocyclohexyl)-m-diisopropylbenzene, α,α'-bis(4-aminocyclohexyl)-1,4-diisopropylcyclohexane or α,α'-bis (4-aminocyclohexyl)-1,3-diisopropylcyclohexane.

Among the alicyclic diamines listed above, bis(aminomethyl)cyclohexanes, bis(4-aminocyclohexyl)methane or 4,4'-diamino-3,3'-dimethyldicyclohexylmethane are preferred, and bis(4-aminocyclohexyl)methane, 1,3-bis(aminocyclohexyl)methane or 1,3-bis(aminomethyl)cyclohexane are most preferred.

In accordance with the invention, when the dicarboxylic acid component is mainly composed of terephthalic acid, and more specifically when the dicarboxylic acid component contains terephthalic acid preferably in amounts of not less than 60 mole %, the diamine component is preferably composed of such aliphatic diamines as described hereinbefore. Further, it is preferred that the amount of the terephthalic acid in the dicarboxylic acid component be defined by the number of carbons in the aliphatic diamine.

More specifically, when the aliphatic diamine is composed of carbon chains of 5-11 carbons, it is preferred that terephthalic acid be contained in an amount of at least 50 mole % in the dicarboxylic acid component. The aliphatic dicarboxylic acid is accordingly contained in an amount of 50 mole % or less in the dicarboxylic acid component.

In more detail, when the aliphatic diamine is composed of short linear carbon chains of 5-7 carbons, it is preferred that terephthalic acid be contained in an amount of 50-85 mole % in the dicarboxylic acid component. The aliphatic dicarboxylic acid is accordingly contained in an amount of 50-15 mole % in the dicarboxylic acid component.

When the aliphatic diamine is composed of an intermittent length of carbon chains of 6-11 carbons, preferably of 6-10 carbons, it is preferred that terephthalic acid be contained in an amount of at least 50 mole % in the dicarboxylic acid component. The aliphatic dicarboxylic acid is accordingly contained in an amount of 50 mole % or less in the dicarboxylic acid component.

On the other hand, when the aliphatic diamine is composed of a relatively long carbon chains of 10-18 carbons, then it is preferred that terephthalic acid be contained in an amount of at least 75 mole % in the dicarboxylic acid component. The aliphatic dicarboxylic acid is accordingly contained in an amount of 25 mole % or less in the dicarboxylic acid component.

As set forth above, when the amounts of the terephthalic acid and aliphatic dicarboxylic acid in the dicarboxylic acid component are specified in accordance with the number of carbons in the aliphatic diamine component, the resultant resin composition not only has good moldability, but also molded articles therewith have high heat resistance, and hence high resistance to heat degradation and high thermal deflection temperature, and have excellent mechanical properties such as flexural strength or wear resistance.

The diamine component may contain aromatic diamines in addition to the alkylene diamines. As such aromatic diamine components, there may be mentioned, for example, m-xylylenediamine or p-xylylenediamine.

The polyamide resin used in the composition of the invention has an intrinsic viscosity [η] of preferably not less than 0.5 dl/g, more preferably not less than 0.6 dl/g, most preferably in the range of 0.7-3.0 dl/g, as measured in concentrated sulfuric acid at a temperature of 30°C.

The above mentioned polyamide resin may be produced by condensation polymerization in solution of a dicarboxylic acid halide and a diamine, corresponding to the dicarboxylic acid and diamine components as described hereinbefore, by a known method as described, for example, in P. W. Morgan, Polymer Reviews, 10, Condensation Polymers by Interfacial and Solution Methods, Interscience Publishers (1965) or Makromol. Chem., 47, 93-113 (1961). A known interfacial method also provides the above polyamide resin.

The polyamide resin may also be produced by melt methods, wherein an aromatic dicarboxylic acid and a diamine or its polyamide salt correspondening to the aromatic dicarboxylic acid component and diamine component, respectively, are polycondensed together in the presence or absence of a solvent such as water. As a further method, oligomers are first produced by, for example, solution methods, and then the oligomers are polycondensed in the solid phase.

The polyamide resin composition of the invention may optionally contain fibrous reinforcements so as to be of higher heat resistance and rigidity. The fibrous reinforcements used include, for example, various organic fibers and inorganic fibers such as glass fibers, carbon fibers, potassium titanate fibers, wollastonite, ceramics fibers, metal coated glass fibers, metal carbide fibers or metal fibers. Inorganic fibers are preferred on account of their high heat resistance, and glass fibers are especially preferred on account of high reinforcing effect. The fibrous reinforcements may be treated in advance with silane coupling agents such as vinyltriethoxysilane, 2-aminopropyltriethoxysilane or 2-glycidoxypropyltrimethoxy-silane.

The fibrous reinforcements may be contained in amounts of not more than 200 parts by weight, preferably of not more than 150 parts by weight, per 100 parts by weight of the aromatic polyamide resin in the composition. The use of excessive amounts reduces fluidity of the composition, making its molding difficult.

The polyamide resin composition of the invention contains at least one additive selected from partially saponified esters and metal salts of aliphatic carboxylic acid of 26-32 carbons. The metal is preferably selected from alkali or alkaline earth metals. The additive is present in an amount of 0.01-5 parts by weight per 100 parts by weight of the aromatic polyamide resin.

The additive improves fluidity in hoppers, melt fluidity and mold releasing properties of the resultant compositions, and prevents thermal decomposition of the polyamide resins to low molecular weight resins, so that the resultant resin composition permits the production of thin walled molded articles.

The partially saponified esters of aliphatic carboxylic acids of 26-32 carbons include, for example, partially saponified esters of aliphatic carboxylic acids such as cerotic acid, montanic acid or melissic acid, with aliphatic polyhydric alcohols The metal salts are preferably alkali or alkaline earth metal salts of the aliphatic carboxylic acids. Specific preferred examples are calcium montanate, sodium montanate, lithium montanate or partially potassium saponified products of butylene glycol esters of montanic acid. The additives may be used singly or as a mixture of two or more.

The additives are contained in an amount of 0.01-5 parts by weight, preferably of 0.05-1 part by weight, per 100 parts by weight of the aromatic polyamide resins. When the amount of the additives is less than 0.01 part by weight per 100 parts by weight of the aromatic polyamide resins, the resultant resin composition still has inferior moldability, whereas when the amount of the additives is more than 5 parts by weight, the resultant resin composition tends to have reduced mechanical properties.

The composition of the invention may be produced by any conventional method, and may contain, if desired, other additives such as heat stabilizers, weather stabilizers, fire retardants, antistatic agents, nucleating agents, colorants, blowing agents or fillers, in amounts which cause no detrioration of desired properties of the composition.

The invention will now be further described with reference to examples, however, the invention is not limited thereto.

### Examples 1-4 and Comparative Examples 1-4

A heat resistant aromatic polyamide resin was prepared composed of an acid component of 60 mole% of terephthalic acid and 40 mole% of adipic acid and a diamine component of 100 mole% of 1,6-diaminohexane. The resin was found to have an intrinsic viscosity [η] of 1.1 g/dl as measured in concentrated sulfuric acid at 30°C and a melting point of 325°C as measured by a DSC method. The polyamide will be referred to as PA-1 hereinafter.

An amount of 100 parts by weight of the polyamide was mixed with an additive selected from those listed below in amounts as shown in Table 1. The additives used will be abbreviated as follows:
- L-1:: calcium montanate WAX CAW2 (Hoechst-Japan K.K)
- L-2 :: sodium montanate WAX NAW1 (Hoechst-Japan K.K)
- L-3 :: lithium montanate WAX LIW (Hoechst-Japan K.K)
- L-4 :: partially calcium saponified esters of montanic acid with butylene glycol WAX OP (Hoechst-Japan K.K)
- L-5 :: ethylenebisstearyl amide ALFLOW H50 (Nippon Yushi K.K)
- L-6 :: polyethylene glycol PEG 2000 (Wako Junyaku Kogyo K.K)
- L-7 :: polyethylene wax WAX PE190 (Hoechst-Japan K.K).

The mixtures were melted and kneaded with a single screw extruder (30mm diameter, 330°C) in an extrusion amount of 8 Kg/hr to provide pellets. Pressures of resins at the top of the extruder and intrinsic viscosity [η] of the pellets are shown in Table 1. Further, the pellets were injection-molded at 340°C with an injection molding machine (IS-50EP, Toshiba Kikai K.K.) to estimate the properties of the compositions. The results are shown in Table 1.

The properties were measured as follows:

### Mold releasing properties:

Flat molds of 100 mm x 50 mm x 0.8 mm were used at 120°C. A: molded articles were readily released from the molds and no distortion was found; B: distortion was in part found; C: remarkable distortion was found as a whole.

### Melt fluidity

Spiral flows were measured with spiral flow test molds at 70°C. The larger the spiral flow, the better the melt fluidity.

### Water absorption

Specimens were immersed in water at 23 °C for 24 hr and the increase in weight was measured in accordance with ASTM D570.

### Tensile strength

Measured in accordance with ASTM D638.

### Tensile strength after water absorption:

Specimens were immersed in water at 23 °C for 24 hr and then tensile strength was measured as above.

### Thermal deflection temperature:

Measured under a load of 18.6 Kg/cm² in accordance with ASTM D648.

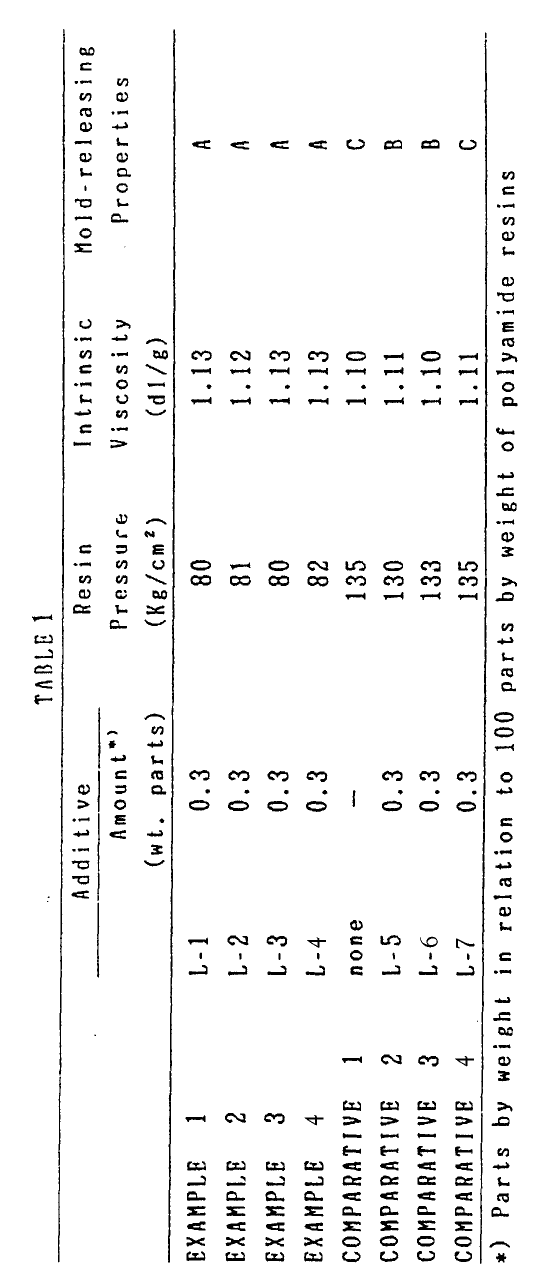

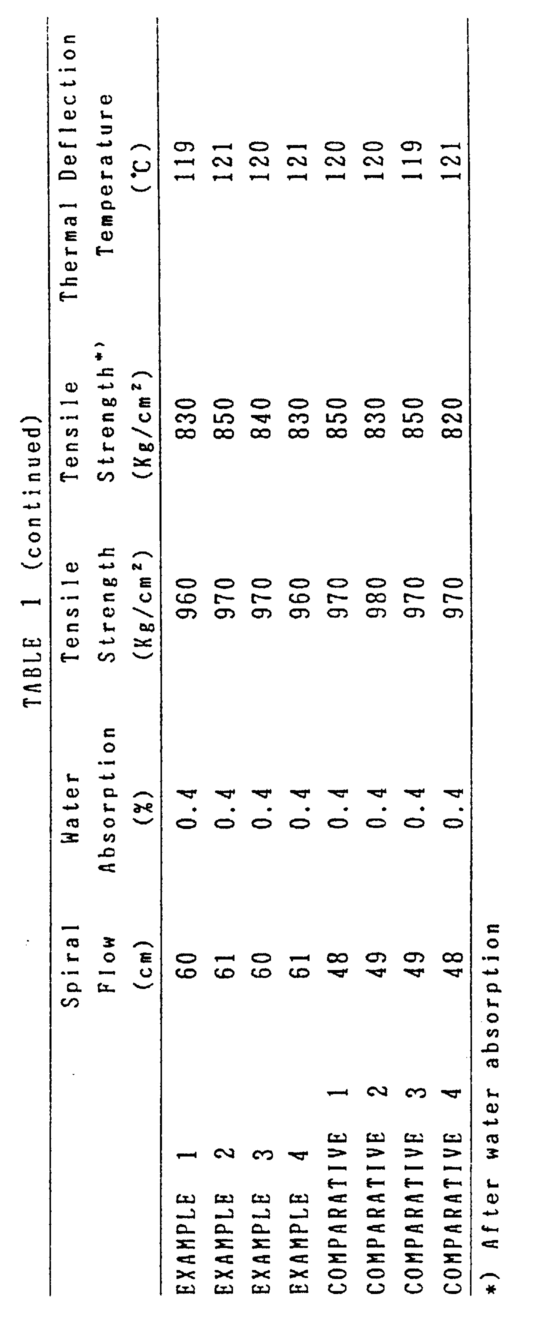

### EXAMPLES 5-8 and COMPARATIVE EXAMPLES 5-7

An amount of 60 parts by weight of the resin PA-1 was mixed with 40 parts by weight of glass fibers (03MA486A, Asahi Fiber Glass K.K.), and additives as metioned before in amounts shown in Table 2.

The mixtures were melted and kneaded with a two screw vented extruder (30 mm diameter, 330°C) in an extrusion amount of 20 Kg/hr to provide pellets. The pellets were injection-molded in the same manner as in the first EXAMPLES to estimate the properties of the compositions. The results are shown in Table 2.

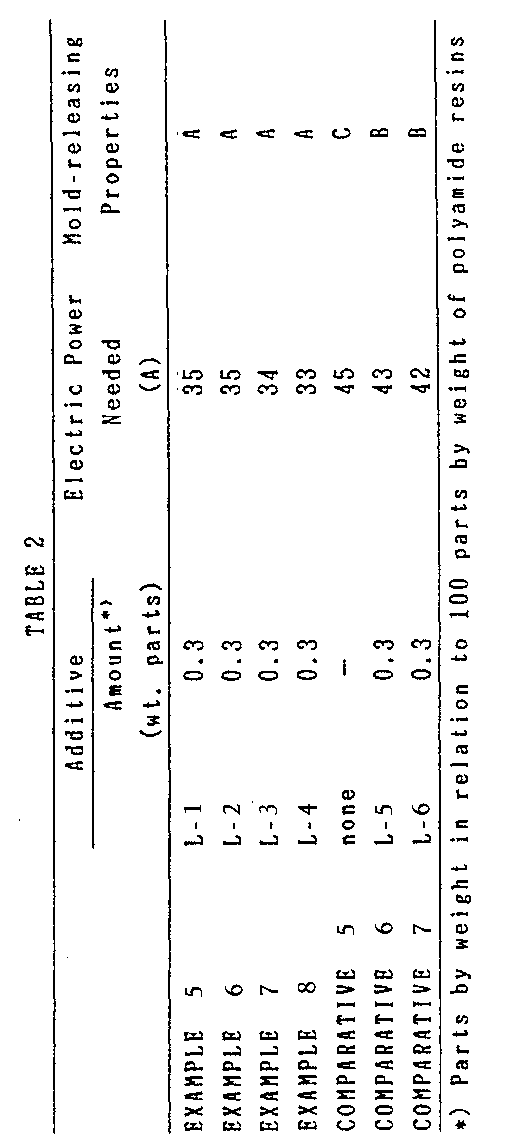

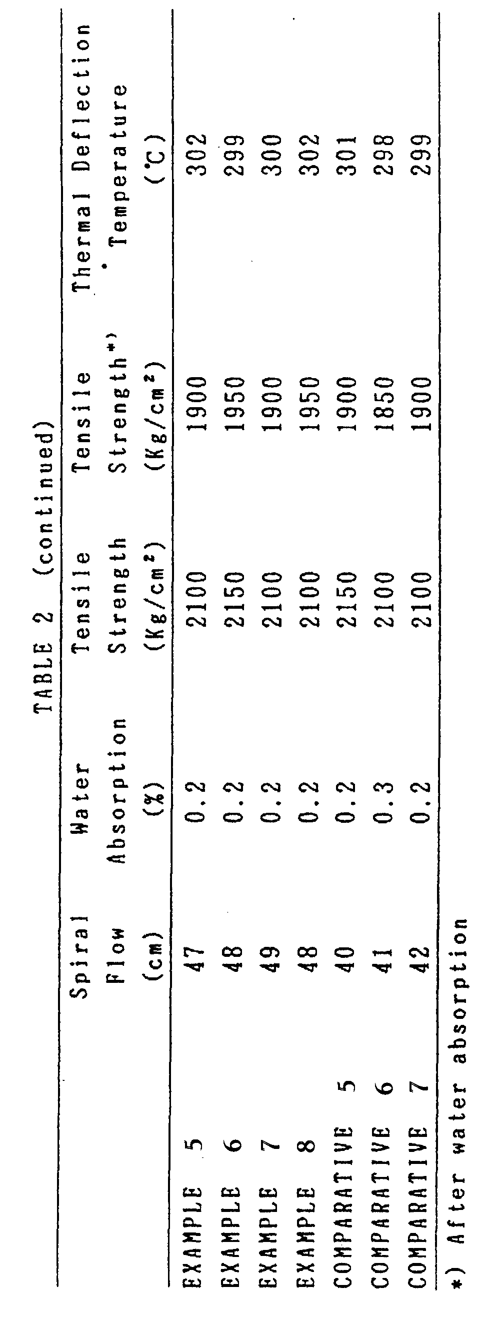

## Claims

1. An aromatic polyamide resin composition which comprises:
(A) an aromatic polyamide resin consisting of:
(a) a dicarboxylic acid component which consists of terephthalic acid in an amount of at least 40 mole% together with an aliphatic dicarboxylic acid in an amount of 60 mole% or less, and
(b) a diamine component comprising at least one aliphatic diamine or alicyclic diamine;
(B) optionally a fibrous reinforcement in an amount of 0-200 parts by weight per 100 parts by weight of the aromatic polyamide resin; and
(C) at least one additive which is a partially saponified ester or a metal salt of an aliphatic carboxylic acid of 26-32 carbon atoms in an amount of 0.01-5 parts by weight per 100 parts by weight of the aromatic polyamide resin.

2. A polyamide resin composition according to claim 1, wherein the dicarboxylic acid component (a) contains terephthalic acid in an amount of at least 50 mole% and an aliphatic dicarboxylic acid in an amount of 50 mole% or less, and wherein the diamine component (b) is composed of an aliphatic diamine component of 5-11 carbon atoms.

3. A polyamide resin composition according to claim 1 or 2, wherein the diamine component (b) is composed of an aliphatic diamine of 6-10 carbon atoms.

4. A polyamide resin composition according to claim 3, wherein the dicarboxylic acid component (a) contains terephthalic acid in an amount of 50-85 mole% and an aliphatic dicarboxylic acid in an amount of 50-15 mole%, and wherein the diamine component (b) is composed of an aliphatic diamine of 5-7 carbon atoms.

5. A polyamide resin composition according to any one of the preceding claims, wherein the aliphatic dicarboxylic acid is adipic acid, and wherein the aliphatic diamine is 1,6-diaminohexane.

6. A polyamide resin composition according to any one of the preceding claims, wherein the polyamide resin (A) has an intrinsic viscosity of not less than 0.5 dl/g as measured in concentrated sulfuric acid at a temperature of 30°C.

7. A polyamide resin composition according to any one of the preceding claims, wherein the fibrous reinforcement is glass fibers.

8. A polyamide resin composition according to any one of the preceding claims, wherein the aromatic dicarboxylic acid component (a) contains at least 60 mole% of terephthalic acid.

9. Molded articles of a polyamide resin composition as claimed in any one of the preceding claims.

## Patentansprüche

1. Aromatische Polyamidharzmasse umfassend:
(A) ein aromatisches Polyamidharz, bestehend aus:
(a) einer Dicarbonsäure-Komponente, die aus Terephthalsäure in einer Menge von mindestens 40 mol% zusammen mit einer aliphatischen Dicarbonsäure in einer Menge von 60 mol% oder weniger besteht, und
(b) einer Diamin-Komponente, umfassend mindestens ein aliphatisches Diamin oder alicyclisches Diamin;
(B) gegebenenfalls eine faserförmige Verstärkung in einer Menge von 0 bis 200 Gew.-Teilen auf 100 Gew.-Teile des aromatischen Polyamidharzes, und
(C) mindestens ein Additiv, das ein teilweise verseifter Ester oder ein Metallsalz einer aliphatischen Carbonsäure mit 26 bis 32 Kohlenstoffatomen ist, in einer Menge von 0,01 bis 5 Gew.-Teilen auf 100 Gew.-Teile des aromatischen Polyamidharzes.

2. Polyamidharzmasse nach Anspruch 1, wobei die Dicarbonsäure-Komponente (a) Terephthalsäure in einer Menge von mindestens 50 mol% und eine aliphatische Dicarbonsäure in einer Menge von 50 mol% oder weniger enthält und wobei die Diamin-Komponente (b) aus einer aliphatischen Diamin-Komponente mit 5 bis 11 Kohlenstoffatomen besteht.

3. Polyamidharzmasse nach Anspruch 1 oder 2, wobei die Diamin-Komponente (b) aus einem aliphatischen Diamin mit 6 bis 10 Kohlenstoffatomen besteht.

4. Polyamidharzmasse nach Anspruch 3, wobei die Dicarbonsäure-Komponente (a) Terephthalsäure, in einer Menge von 50 bis 85 mol%, und eine aliphatische Dicarbonsäure in einer Menge von 50 bis 15 mol% enthält und wobei die DiaminKomponente (b) aus einem aliphatischen Diamin mit 5 bis 7 Kohlenstoffatomen besteht.

5. Polyamidharzmasse nach einem der vorangehenden Ansprüche, wobei die aliphatische Dicarbonsäure Adipinsäure ist und wobei das aliphatische Diamin 1,6-Diaminohexan ist.

6. Polyamidharzmasse nach einem der vorangehenden Ansprüche, wobei das Polyamidharz (A) eine Grundviskosität von nicht weniger als 0,5 dl/g, gemessen in konzentrierter Schwefelsäure bei einer Temperatur von 30°C aufweist.

7. Polyamidharzmasse nach einem der vorangehenden Ansprüche, wobei die faserförmige Verstärkung Glasfasern sind.

8. Polyamidharzmasse nach einem der vorangehenden Ansprüche, wobei die aromatische Dicarbonsäure-Komponente (a) mindestens 60 mol% Terephthalsäure enthält.

9. Formkörper aus einer Polyamidharzmasse nach einem der vorangehenden Ansprüche.

## Revendications

1. Composition à base de résine de polyamide aromatique, qui comprend :
(A) une résine de polyamide aromatique, qui est constituée de :
(a) un constituant acide dicarboxylique qui est constitué d'au moins 40 % en moles d'acide téréphtalique et de 60 % en moles ou moins d'un acide dicarboxylique aliphatique, et
(b) un constituant diamine comprenant au moins une diamine aliphatique ou une diamine alicyclique,
(B) éventuellement une matière de renforcement fibreuse, en une quantité de 0 à 200 parties en poids pour 100 parties en poids de résine de polyamide aromatique, et
(C) au moins un additif qui est un ester partiellement saponifié ou un sel métallique d'un acide carboxylique aliphatique ayant 26 à 32 atomes de carbone, en une quantité de 0,01 à 5 parties en poids pour 100 parties en poids de résine de polyamide aromatique.

2. Composition à base de résine de polyamide selon la revendication 1, dans laquelle le constituant acide dicarboxylique (a) contient au moins 50 % en moles d'acide téréphtalique et 50 % en moles ou moins d'un acide dicarboxylique aliphatique et dans laquelle le constituant diamine (b) est constitué d'une diamine aliphatique ayant 5 à 11 atomes de carbone.

3. Composition à base de résine de polyamide selon la revendication 1 ou 2, pour laquelle le constituant diamine (b) est constitué d'une diamine aliphatique ayant 6 à 10 atomes de carbone.

4. Composition à base de résine de polyamide selon la revendication 3, pour laquelle le constituant acide dicarboxylique (a) contient 50 à 85 % en moles d'acide téréphtalique et 50 à 15 % en moles d'un acide dicarboxylique aliphatique, et pour laquelle le constituant diamine (b) est constitué d'une diamine aliphatique ayant 5 à 7 atomes de carbone.

5. Composition à base de résine de polyamide selon l'une quelconque des revendications précédentes, dans laquelle l'acide dicarboxylique aliphatique est l'acide adipique et la diamine aliphatique est le 1,6-diaminohexane.

6. Composition à base de résine de polyamide selon l'une quelconque des revendications précédentes, pour laquelle la résine de polyamide (A) possède une viscosité intrinsèque non inférieure à 0,5 dl/g, cette viscosité intrinsèque étant mesurée dans de l'acide sulfurique concentré à une température de 30 °C.

7. Composition à base de résine de polyamide selon l'une quelconque des revendications précédentes, dans laquelle la matière de renforcement fibreuse est des fibres de verre.

8. Composition à base de résine de polyamide selon l'une quelconque des revendications précédentes, pour laquelle le constituant acide dicarboxylique (a) contient au moins 60 % en moles d'acide téréphtalique.

9. Article moulé obtenu à partir d'une composition à base de résine de polyamide telle que revendiquée dans l'une quelconque des revendications précédentes.
